**Europäisches Patentamt**

**European Patent Office**

**Office européen des brevets**

(11) Publication number: **0 045 307**
**B1**

(12) **EUROPEAN PATENT SPECIFICATION**

(45) Date of publication of patent specification: **12.06.85**

(51) Int. Cl.⁴: **B 41 J 5/10**

(21) Application number: **81900304.7**

(22) Date of filing: **05.02.81**

(86) International application number:
**PCT/GB81/00013**

(87) International publication number:
**WO 81/02272 20.08.81 Gazette 81/20**

(54) **KEYBOARDS AND METHODS OF OPERATING KEYBOARDS.**

(30) Priority: **05.02.80 GB 8003729**
**19.04.80 GB 8012944**
**20.05.80 GB 8016644**
**20.05.80 GB 8016645**
**03.11.80 GB 8035232**
**03.11.80 GB 8035233**

(43) Date of publication of application:
**10.02.82 Bulletin 82/06**

(45) Publication of the grant of the patent:
**12.06.85 Bulletin 85/24**

(84) Designated Contracting States:
**AT CH DE FR GB LI LU NL SE**

(56) References cited:
**FR-A-1 567 411**
**FR-A-2 360 427**
**GB-A-1 016 993**
**US-A-3 332 527**

(73) Proprietor: **NATIONAL RESEARCH DEVELOPMENT CORPORATION**
**101 Newington Causeway**
**London SE1 6BU (GB)**

(72) Inventor: **Litterick, Ian Andrew Noel**
**57 Carleton Road**
**London N7 OET (GB)**

(74) Representative: **Hasler, Christopher et al**
**Patent Department National Research Development Corporation 101 Newington Causeway**
**London SE1 6BU (GB)**

## Description

The present invention relates to keyboards for operation by human hand digits to signify letters of an alphabet and/or other units of information by generating signals indicative of the letters or other units of information.

The invention is concerned in particular with keyboards intended for operation by only a single human hand, but in some aspects the invention is concerned with keyboards intended for use by two human hands. The invention is concerned particularly with keyboards for operation to signify letters of an alphabet, but in some aspects is concerned with keyboards for operation to signify other units of information, including numerals and/or musical symbols. In some aspects the invention is concerned with a novel layout of the keys relative to each other, and in other aspects the invention is concerned with the functions of the keys, and/or the shaping of the surfaces of the keyboard. With the increasing trend towards the miniaturization of information processing equipment, and with the increasing need for people to have access to information processing equipment whilst doing other operations at the same time, there is an increasing need for a small and/or single handed keyboard for information input. If a small keyboard is to be used at speed, it has been found that the keyboard should preferably be designed for use by one hand as there is not room for two hands on a small device.

Until now, there have been two broad classes of keyboard available for small alphanumeric input devices. The first and most common arrangement has the keys in a rectangular matrix based on the traditional typewriter layout QWERTY ... or on the alphabetical order layout ABCD ... Whilst these arrangements are comparatively easy for the unskilled user to operate, it is impossible to use such an arrangement at any speed, because only one or two fingers can be used at once, and it is necessary to look at the keyboard to locate the keys. Even so, because the keys are so close to each other, it is easy to mis-key.

An example of such a keyboard is disclosed in British Patent Specification No. 1016993 which relates a generally conventional two handed keyboard, in which the keys are arranged to some extent in columns and the keyboard is shaped so as to be in some respects similar to the shape of the human hand. However, because of the shape and layout of the keyboard shown, it is quite impractical for such a keyboard to be operated at reasonable speeds by a single hand.

The second broad class of small keyboard is the chord keyboard. This has a small number of keys but a larger number of characters can be created by using the keys in various combinations, referred to as chords, in the same way that chords of musical notes are played. Although operation may be more complicated, in a simplified view there may be provided one key per finger, and these keys may be depressed singly or in combinations to create the letters of the alphabet, numerals and so on.

A third form of keyboard which has relevance to the present invention, is provided by the more modern forms of two handed keyboards, in which the key arrangements are shaped to take account of the shapes of the normal pair of human hands, and in which the configuration of letter allocation to the keys takes into account the frequency of use of letters.

There will now be described examples of the known types of keyboard set out above.

Two examples of a small keyboard suitable for use by a single hand but having the keys in a conventional rectangular array consist of the Lexitron Translator keyboard, and the Canon Communicator keyboard (Lexitron and Canon are Trade Marks). The former consists of a small conventional rectangular array of keys labelled in normal alphabetical order and is used as input to the electronic translation device. The Canon Communicator is a communication aid for partially disabled persons and provides a printed paper output in response to operation of letter keys in a rectangular array. In the Canon Communicator, the letter order is not an alphabetical order, but is an arrangement in which commonly used letters are placed at the outside of the array, to avoid mis-keying for example by a disabled person operating a mouth stick.

An example of a chord keyboard is a keyboard known as the Microwriter which consists of a single handed keyboard having five normal keys positioned in the shape of a human hand for operation by the five digits of the human hand, together with two control keys operable by the thumb (Microwriter is a Trade Mark). A number of characters much larger than the number of keys can be obtained by pressing the keys singly or in combinations including combinations with the thumb control key. Although the Microwriter attains compact size by using few keys, it has a number of disadvantages. Operation of the device is slow, and it is easy to make errors since most characters require more than one key to be depressed simultaneously. The device is not easy to learn, since the mnemonics employed are not intuitive. The device is also limited in the range of characters expressible. A description of the Microwriter device can be found in the following reference:— Mussin, E. H. "The Microwriter", IERE Electronic Office Conference Proceedings, April 1980.

Another single handed keyboard which has been proposed is the IBM so-called "Chord Keyboard" which has only ten finger keys, but uses the spaces between the keys, by means of finger shaped dimples, to create a full range of numerals, letters and so on. Depression of any dimple shape will produce depression of one, two or four keys. The IBM keyboard also allows depression of multiple dimples at once, and, with the addition of the thumb keys, can therefore obtain a very large number of combinations, including some words and parts of words, in single movements. The key pattern is that the thumb keys are off-set to one side of the main keyboard, but the main keys are set out in a strictly rectangular array which is unrelated to the shape of the human hand. A description of the IBM keyboard can be found in US Patent Specification No. 4042777 (Bequaert and Rochester). A keyboard similar in some ways has been developed in the UK by Loughborough Consultants Limited and a description can be found in UK Patent Specification No. 1492538 (Loughborough Consultants Limited).

Because of the extra time needed to form a chord, compared with tapping a single key, both the Microwriter and the IBM keyboards are slower than the traditional two handed keyboard, even if used by a skilled user. The Microwriter also has the disadvantage that it has the limited repertoire of characters (a limitation particularly acute when this range is compared with that offered on a modern word processing editing terminal) so that a series of chords is required in order to obtain many of the characters or commands required.

The IBM keyboard also has the disadvantage that considerable training is needed in order to attain a moderate level of proficiency, and use of the keyboard is more tiring, as well as requiring more skill, than use of a traditional two handed keyboard. Both keyboards also have the disadvantage that they have to be taught before use. It is virtually impossible, even for an intelligent person, to start to operate the keyboard even at a rudimentary level, without instruction.

An example of the two handed keyboard in which the key configuration is shaped to some extent to the human hand, is a keyboard known as the Maltron keyboard developed by a UK Company PCD (Maltron is a Trade Mark). This keyboard has been ergonomically designed for two handed use and is faster than a standard Qwerty keyboard. Except for speed it has most of the disadvantages of the Qwerty keyboard, in particular it is bulky, and is probably only suitable for professional typists. A description of the Maltron keyboard can be found in the following reference: Malt, Lillian G., "Keyboard Design in the Electronic Era". PIPA Eurotype Forum, Conference Paper No. 6, 14—15 September 1977.

In accordance with another aspect of the present invention, the invention is concerned with the type of motion employed by the fingers during information input on a keyboard. Keyboards, even musical keyboards, have traditionally used a tapping motion. This is left over from the days when mechanical switches or keys needed to be pressed a substantial distance in order to operate the mechanism to which they were attached. Today, even on capacitive and other kinds of switches which need no actual movement to operate, it is still assumed in known devices that they will be operated by a tapping movement.

Traditional two-handed keyboard designers have tried to arrange the layout of the keyboard such that most of the frequent digrams (combinations of characters) are typed with alternate hands, as the tapping movement from one hand to another is in most cases faster than a tapping movement from one finger to another on the same hand. A one-handed keyboard cannot take advantage of the increase in speed to be gained by tapping from hand to another and, therefore, a one-handed keyboard relying on the tapping principle is likely to be slower in operation than a two-handed keyboard. One of the objectives of the IBM chord keyboard use of chords is to reduce the number of movements necessary and therefore to make up this loss of speed. However, because of the extra complexity of creating the chords, this has not been very successful.

In accordance with yet another aspect of the invention, the invention is concerned with the shaping of keys and the keyboard surface. It is now accepted practice to dish the top surface of a typewriter key to help the finger to correctly locate itself on the key which it is striking. In addition some of the better machines aim to give more "tactile feed back" by differentiating the "feel" of the home keys (keys on which the fingers are usually considered to be based when at rest). This may be done by providing small projections on the surface of the key for the finger to feel, by changing the shape of the dishing, or by changing the pressure required to operate those particular keys.

In addition, some keyboards which do not use moving switches, have had the sensitive surface of the switches thereof set into recesses so that the recesses aid in correct location of the keys, and the raised surface between keys aids in discouraging mis-keying. However, such recesses have not been applied selectively to key configurations and have merely been uniform recesses for the keys. Also, most keyboard surfaces which use keys with very small travel or no travel have tended to be completely or nearly flat and therefore give very little or no tactile help with finger location. An audible tone is often used to tell the operator when the key has registered, but this does nothing to discourage mis-keying or to help with finger location.

An example of this shaping of typewriter keys to assist in locating the fingers is shown in French Patent No. 1567411. In figure one of this French Patent, the upper rows of keys is shown as having a surface inclined to the horizontal, and this specification describes that this enables the upper row of keys to be operated by sideways pressure, rather than the normal vertical "tapping" movement. It is apparent however that this keyboard is still generally of the conventional type, and this the keys must be operated by a generally percussive movement of the fingers, albeit a horizontal one.

In accordance with this invention, there is provided a keyboard for operation by human hand digits to signify letters of an alphabet by generating signals indicative of the letters, comprising
    a base,
    a plurality of keys including a plurality of letter keys each operable by a human digit to signify a letter, in which operation of no more than one at a time of the principal letter keys is required when signifying any letter of the alphabet,

wherein at least some of the keys are contoured so as to provide a surface inclined to the horizontal for contact by a human digit such that the said keys may be operated by movement of a digit in a substantially planar movement parallel to the keyboard, characterised in that the keys are so arranged on the keyboard as to permit the sliding of a digit from one key to another in a substantially planar movement to cause a force to be derived from the planar movement of the digit, and translated by the inclined surface of the key into a force generally at right angles to the plane of the keyboard to operate the key.

The keyboard will usually include a number of keys other than letter keys, for example shift keys for producing capital and lower case letters, and for producing numerals from the letter keys when in the appropriate shift arrangement. Normally it will be preferred that all the letter keys form principal letter keys, but in some arrangements a few of the least used letters may be placed on letter keys positioned to be associated with fingers other than the three strongest fingers of the human hand.

Normally the keyboard in accordance with the invention will have both the configuration of the keys and the configuration in which the letters are allocated to the letter keys, in a shape related to the shape of a single human hand, but in some applications the configuration of keys may be a plane flat rectangular array with only the letter configuration related to the shape of a single human hand, and in other applications the configuration of keys may be in the shape of a single human hand, but the letter allocation may be a simple alphabetic or conventional QWERTY, arrangement. Where the configuration of the keys is related to the shape of a single human hand, this may be effected by the layout of the keys in a single plane, and/or in different planes, and/or by contouring of the base of the keyboard.

Preferably the said configuration of the keys is related to the shape of a single human hand at least in that the keys are positioned to take account of the difference in length between the longest finger and the other two strongest fingers of the human hand so as to allow the three strongest fingers to rest comfortably on three keys, or on three transverse pairs of keys, respectively, of three different groups of principal letter keys when the hand is at rest. The keys, or transverse pairs of keys on which these fingers rest are generally referred to as the "home" keys.

In some preferred configurations this feature of allowing for the different lengths of the three strongest fingers of the human hand can be achieved by having the keys arranged in a matrix of columns of keys generally longitudinal of the fingers and rows of keys generally transverse of the fingers, in which the said comfortable rest position of the three strongest fingers is achieved at least in part by arranging the transverse rows to be curved and/or stepped. Alternatively or in addition, the said comfortable rest position of the three strongest fingers can be achieved at least in part by having the pitch between transverse rows of keys substantially equal to the difference in length between the longest finger and the other two strongest fingers of the human hand.

Preferably the said configuration in which the letters may be allocated is arranged so that the most commonly used letters can be signified by the operation of principal letter keys at or close to the natural rest position of the three strongest fingers of the human hand.

The said principal letter keys are arranged in three groups positioned for the groups to be associated respectively with the three strongest fingers of the human hand, and in particular each said group of letter keys comprises at least one column of preferably three or more letter keys positioned to allow keys of the column to be reached by movement of a human finger forward and backward relative to the body of the user.

In general it is preferred that all the letter keys are positioned for operation, in normal use, by the fingers of the human hand. This will normally leave the thumb free for operation of shift keys and the like.

As has been mentioned, it is preferred that all the letter keys are arranged as principal letter keys, and it is further preferred that all the letters of the alphabet are allocated to principal letter keys, and that any letter of the alphabet can be signified by an action consisting only of operation of one appropriately selected letter key. The advantage of such an arrangement is that the three strongest fingers of the human hand are used for the main function of producing letters, in each case by a single stroke of one of the main three fingers of the human hand, leaving the little finger and thumb free for operating shift and other control keys.

In accordance with one particular group of embodiments of the invention, there may be provided mode selector means operable by movement of the said single human hand without substantial movement of the whole hand across the keyboard, said mode selector means being operable to select different modes for the letter keys such that operation of a letter key in different modes causes switch means to generate signals indicative of different letters, and/or different forms of the same letter, and/or different non-letter items of information.

In a preferred form of this class of embodiments, the letters of the alphabet concerned are divided into two or more classes of letters selectable in respective modes by the mode selector means, the letter keys are operable to signify different letters from different classes depending on which class has been selected by the mode selector means, and in which any letter of the alphabet concerned can be signified by operation of only a single letter key at a time, provided that an appropriate mode selection is made by operation of the mode selector means.

Such an arrangement allows a large number of letters and other units of information to be provided from a relatively small number of keys on a one handed keyboard. Preferably the said mode selector means comprises a mode key positioned for operation, in normal use, by a human digit other than the three strongest fingers of the human hand. In a convenient form of this arrangement, the said mode selector means comprises a switching device associated with the said base of the keyboard and operable by a rocking motion of the said base and arranged to be operated in normal use by a rocking motion of the whole said single human hand.

In accordance with the invention which has been set out above, various embodiments may be constructed giving a number of practical advantages and features, and some of these features will now be described.

The keyboard is conveniently laid out so that each digit has arranged beneath it, in columns corresponding to the position of each of the digits when the hand is held relaxed on a surface, a number of keys designed for the use of that digit. Clearly the keyboard can also be used as a single-finger "hunt and peck" operation, but the keyboard will be discussed in this specification in terms of the way the fingers operate for touch typing.

Considering firstly the key layout in relation to the fingers, the index, middle and ring fingers are the three most agile and strongest of the four fingers, and these are therefore made responsible for most of the movement, in accordance with preferred arrangements of the invention. The keys relating to most of the letters of the Roman alphabet are laid out beneath these fingers for their use, and only one of these three fingers needs to be used at any one time to access any of the 26 letters of the Roman alphabet. Thus none of these fingers need ever be used in a chord in combination with any of the others of the three main fingers to create a single character.

Given that it is desirable to restrict the number of keys on the keyboard to a lesser number than that on the traditional QWERTY keyboard, and given the need to generate enough characters from the keyboard, it is necessary to obtain multiple character sets from each of the keys arranged for the use of the index, middle and ring fingers. The principle of the "SHIFT" key to be used simultaneously with another key, is well established on other keyboards and is continued in preferred arrangements of the present invention, as is the use of a "CONTROL" key, which is effectively another "SHIFT", on keyboards for computer equipment. In addition, to further cut down the number of keys necessary, the range of output characters can be divided into two or more "modes", as has been set out above. Whilst it would be possible to lock the MODE key or SHIFT or CONTROL in place, it is preferable to be able to key them simultaneously and momentarily with the relevant letter key.

Whilst the thumb is strong, it is limited in its range of movements relative to the other fingers. However it can conveniently operate control keys like CONTROL and CAPITALS simultaneously with the other fingers when necessary.

If the little finger then operates a MODE key or keys (to change for example to a NUMERALS AND PUNCTUATION mode) this key or keys can be operated simultaneously with the keys operated by the thumb.

In accordance with another feature of the invention, these control keys (CONTROL, CAPITALS and MODE) are elongated parallel to and to a length corresponding to the length of the keys which are arranged for the use of the character-forming fingers. By this means, these keys may be operated simultaneously with any of the keys under the three character-forming fingers, without any awkward stretching being necessary. This lengthening means that these control keys can be conveniently reached from any position on the keyboard.

The contouring referred to is preferably applied both to the base of the keyboard and to the keys thereof, although it is to be appreciated that in some cases contoured keys may be provided on an otherwise flat keyboard, or alternatively a contoured base may be provided for the keyboard, with the keys either flat or having a conventional dished shape common to all the keys. The invention as set out in this aspect is particularly concerned with improving keyboard operation by substantially planar movement of digits of the human hand, but it is to be appreciated that the contouring may also give advantage during conventional tapping movement of digits.

The said contouring is such as to enforce or assist movement of a human digit from one key to another of certain predetermined sets of keys, and/or to prevent or inhibit movement of a human digit from one key to another of certain predetermined sets of keys, during said substantially planar movement of a human digit.

In a particularly preferred arrangement the keys are arranged in a pattern providing groups of keys, the keys of each group being positioned for operation selectively by a single human digit associated in operation with that group, and said contouring is arranged to prevent or inhibit said substantially planar movement of the human digit between the keys of the group with which the digit is normally associated to the keys of another group. Conveniently the said contouring comprises a raised barrier portion or portions of the base running between adjacent groups of keys, but in other arrangements the contouring may comprise placing the groups of keys apart with a depression between the groups, or placing the groups in slightly different planes. The term substantially planar movement of the human digit is intended to refer to planar movement in the general plane of the keyboard, as opposed to tapping movement at right angles to the general plane of the keyboard, but it is to be appreciated that in some circumstances some keys or key surfaces may be positioned at slightly different planes relative to the main general plane of the keyboard.

The invention finds particular application where the keys are arranged in a pattern in which certain sets of keys are operable to signify letters or other units of information which commonly occur in sequence, and said contouring is such as to enforce or assist movement of a human digit from one to another of the keys in a set related to such a sequence, during said substantially planar movement of the human digit.

Examples of such sets of letters which occur in sequence are the letters T and H, and the letters E, R. Other combinations may be found in alphabetical letters, and also, for example, in musical notation, where musical notes constitute units of information which may be signified by the keyboard.

In this particular respect, the invention is concerned with the motion by which keys are made to operate. Instead of relying on the traditional tapping motion, a keyboard may be designed to be operated by a sliding motion. Because the finger does not need to leave the surface of the switch, motions from one key to another can be faster than if the finger has to be lifted from one key to another in a tapping motion. For the keys to operate through a sliding motion, it is necessary to use keys with a small travel or keys with no travel at all such as is found on a capacitive type key pad.

In another form of the present invention, the invention is concerned with the shape and operation of individual keys. In accordance with this feature, at least some of the keys are contoured to provide a surface inclined to the horizontal for contact by a human digit such that during said substantially planar movement of a human digit, a force derived from the planar movement of the digit is translated by the inclined surface of the key into a force generally at right angles to the plane of the keyboard to operate the key.

In connection with this feature, and the preceding features, at least in preferred embodiments thereof, the invention is concerned with a number of details of the shaping of the surface of the keyboard and keys to make the sliding motion more easy and effective and to increase the tactile feedback which will enable the user to avoid errors and to key faster. Raised mouldings on the keys can have contoured sides such that a horizontal movement of the finger, striking against the moulding, will produce a downward motion in the moulding, and therefore in the key switch operated by the key.

If the mouldings on each key differ in shape or size then the user can feel readily whether the correct key or incorrect key is being pressed. Suitably shaped raised mouldings (in combination with the fact that the keys do not have any substantial travel) also enable the keys to be set closer together but still to be keyed individually, without also, inadvertently, operating another key.

The further the movement required in keying, the longer it takes, and the more difficult it is, particularly if other keys are having to be hopped, to make sure that the movement ends accurately and on the right key. If the key surface edge moulding is substantially raised for keys which are at a distance from the home position, those keys will offer a greater target area for the moving finger, and will therefore be more easily struck and more rapidly struck than would be the case if they were the same size as other keys.

As has been mentioned, there may also be provided in accordance with the invention raised mouldings or barriers between the fingers. These may serve three purposes. They may act as a stop for side-to-side movement of the finger and thus help the finger to locate itself on the keys at either side of the finger column. The finger barriers may stop the fingers mis-keying by inadvertently hitting a key in the adjacent column supposed to be used by the adjacent finger. Finally the presence of the barrier may enable the keys to be spaced closer to each other without running the risk of one key depression fouling another.

It is to be appreciated that the various features set out in accordance with the invention may equally well be applicable in combinations with each other. In particular there may be provided a keyboard as set out in accordance with the first aspect of the invention in which the base and/or at least some of the keys is or are contoured in such a manner as to effect or enhance operation of the keyboard during substantially planar movement of a digit of the human hand consisting of movement substantially in or parallel to the plane of the keyboard.

Embodiments of the invention will now be described by way of example with reference to the accompanying drawings in which:—

Figure 1 is a plan view of a preferred keyboard embodying the invention, suitable for right-handed use;

Figure 1(a) is a cross-section taken length ways through the keyboard through the keys disposed for the use of the index finger, along the lines A—A in Figure 1;

Figure 1(b) is a cross-section from side-to-side of the keyboard through the first row of keys, along the line B—B in Figure 1;

Figure 1(c) is a cross-section from side-to-side of the keyboard through the keys disposed for the thumb and little finger, along the lines C—C in Figure 1;

Figure 2 is a plan view of two adjacent keys for use by the same finger, showing the marking of legends and the positioning of contoured mouldings on the key;

Figure 2(a) is a side-to-side cross-section along the lines A—A in Figure 2, through the same two keys, showing the mouldings and demonstrating how the keys may be depressed through a sideways movement of the finger;

Figure 2(b) is a front-to-back cross-section along the lines B—B in Figure 2, through one of the two keys, showing the moulding and demonstrating how the keys may be depressed through a sliding movement of the finger towards or away from the palm of the human hand;

Figure 2(c) is an isometric view of a key, showing the moulded contours;

Figure 3 shows a detail of another keyboard embodying the present invention, and using mouldings between adjacent groups of keys, the keys being arranged on diagonal instead of transverse horizontal rows;

Figure 4 shows another keyboard embodying the invention having an alternative plan of the keyboard with some letter keys allocated to the little finger and with keys arranged along diagonals rather than in horizontal transverse rows;

Figure 4(a) shows in diagrammatic form the detail of a particular key of the keyboard of Figure 4;

Figure 5 shows a further alternative keyboard embodying the invention, and illustrates a version with fewer letter keys, intended for use in at least two modes, where the mode changes are intended to be operated through rocking the whole keyboard on switches positioned on the underside of the keyboard;

Figure 6 shows a lengthways cross-section of the keyboard of Figure 5, and indicates the mode switches and a raised hand-rest bar;

Figure 7 shows cross-sections of various different contoured mouldings which can be used to form the upper surface of keys for use in a keyboard embodying the invention;

Figure 8 is a block circuit diagram showing how a keyboard embodying the invention may be connected to a computer, printer, or other output or storage device, for utilisation of signals generated representing letters and/or other units of information; and

Figure 9 shows diagrammatically a switch suitable for use with the keys of a keyboard embodying the present invention.

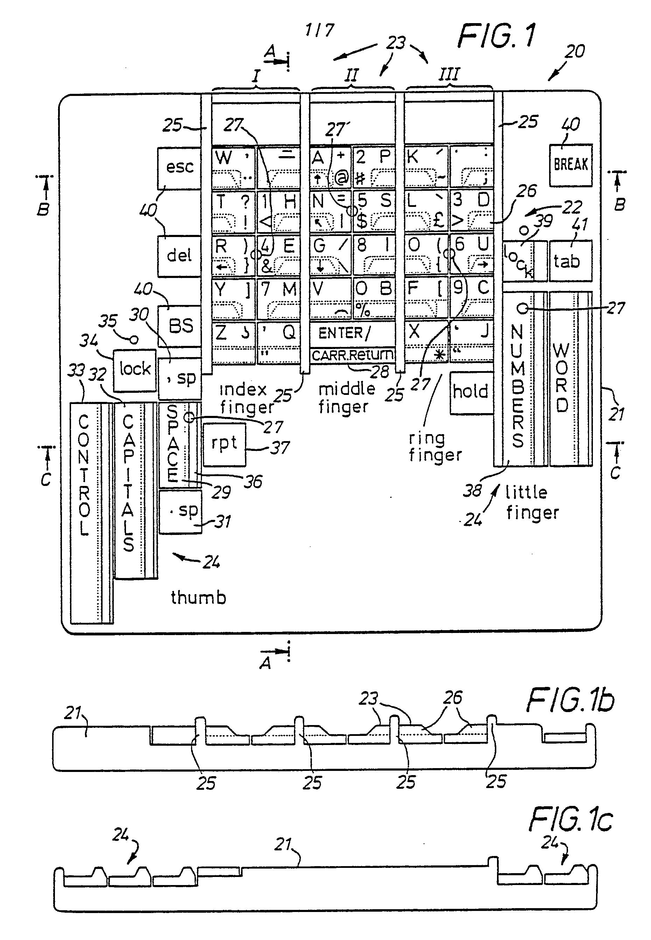

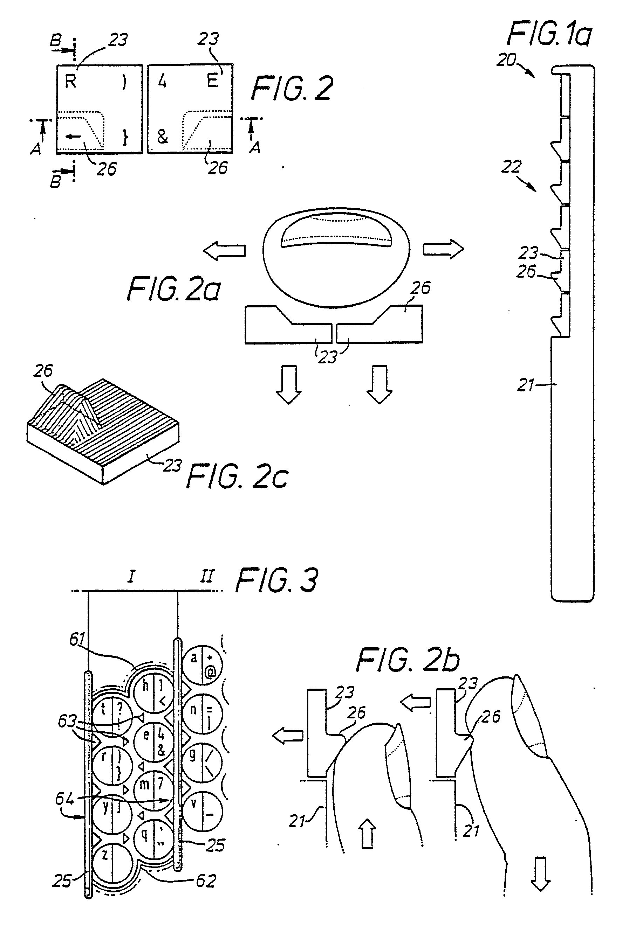

Referring firstly to Figures 1 to 2(c), especially initially Figure 1, a keyboard 20 comprises a base 21 on which are mounted a plurality of keys indicated generally at 22 and including letter keys 23 and control keys 24. The keys 22 are laid out generally in the shape of a human hand, in that the control keys 24 to the left are intended for operation by a human thumb, and the control keys 24 to the right are intended for operation by the human little finger. The letter keys 23 are intended for operation by the three strongest fingers of the human hand and are grouped in three groups indicated at I, II, and III, for use by the index finger, middle finger, and ring finger respectively.

Conveniently the keyboard occupies an area 6.1 inches square (157 mm × 157 mm). These dimensions could be changed for larger or smaller hand sizes and in particular the keyboard could be made considerably smaller as discussed under section 5 below.

The columns of keys are laid out as shown, one for each of the index, middle and ring fingers. Between and either side of these columns are raised barriers (25) approximately 2 mm thick and 10 mm in height. These barriers separate the fingers from each other, discourage fingers from hitting keys in the wrong column, help to guide the fingers on to the right position for operating the keys, and enable the keys to be positioned closer together than would otherwise be the case.

The keys (23) are laid out so that for each finger there are five rows of keys and two columns. The keys are approximately half an inch square (12 mm). The bottom row of the middle finger's column consists of a double key, two keys wide, to perform the ENTER/CARRIAGE RETURN function. At the top of each finger column is left a space for an extra row of keys, six in all, reserved for other use, e.g. for accent keys in foreign languages.

It should be noted that although the embodiment has been designed for the English language, it will be suitable, with minor alterations, for other languages.

On the top surface of each key (23), along the edge closest to the operator, is a raised and contoured moulding (26). Its cross section and design are shown in Figures 2—2(c). These mouldings, about 3 mm high from the flat surface of the key at their highest point, are designed to convert a horizontal, sliding motion of the finger, into a vertical depression of the key.

The switch incorporated in each key is a switch requiring low operating pressure (e.g. 160 gm) and short travel (e.g. 0.3 mm), such as the FES-310 range from Fujitsu Ltd., with the moulding applied to the surface 19, depression of which operates contacts 18 (Figure 9).

The shape of the mouldings on the surface of the key (as shown on Figure 2(c)) is designed such that a backwards movement of the finger, e.g. from "t" to "r" will automatically tend to depress the "r" key, a forwards movement, e.g. from "r" to "t" will automatically tend to depress the "t" key, and a sideways movement from "t" to "h" or "h" to "t" will also tend to automatically depress the "h" or "t" respectively. Similarly a diagonal movement, e.g. from "h" to "r" or from "e" to "t" will also tend, because of the contouring of the mouldings, to depress the key the finger is sliding on to.

These sliding movements can be continued over more than one key, so that, for instance, the word "THEM", "THERE", "THEY" can all be "typed" in a single rapid movement. These mouldings operate in the same way on all three fingers. This ability to slide between common words brings a secondary advantage: it is easier to learn the positioning of the keys on the keyboard because remembering the words will help the user to remember the relative position of the keys.

A home position is marked on each of these three columns by a small raised tit 27 at the junction of the "r" and "e" keys on the index finger, the "n" and "s" keys on the middle finger, and the "o" and "u" keys on the column for the ring finger. This corresponds fairly closely to the position taken by the relaxed hand when the hand is laid on the keyboard.

Within the columns for each finger, the raised mouldings (26) at each row extend for different lengths over the bottom of the keys. Thus, whilst the moulding on the bottom row, the Z, Q, V, B, X and J keys, is continuous, stretching over the whole of the bottom of each key, the moulding for the home keys is shorter, stretching only half way over the bottom of the key. The mouldings on the keys immediately above the home row are the same length as the mouldings on the home row, and the mouldings on the other rows of keys are longer, in regular steps, the further the keys are from the home row.

The reason for this difference in the length of the mouldings is so that each finger can feel, from the feel of the moulding beneath it (which will vary according to how far across the bottom of the key the moulding stretches), which key the finger is pressing. "Tactile feedback" will help the operator to know instantly from its feel which key is being operated. This will lessen the likelihood of error, speed up operation, and, if an error is made, make it immediately obvious so that it can be corrected straight away. With this arrangement, it should be noted that, for each finger, each key will *feel* quite different from any other key laid out for the use of that finger.

The ENTER/CARRIAGE RETURN key in column II has an even higher moulding (28), rising some 10 mm from the surface of the key. Keys in the reserved position would preferably also have a similar enlarged moulding. The reason for this is as follows.

It is logical to lay the keys out so that the commoner keys for each finger are disposed either beneath or adjacent to the home keys, and this arrangement has been followed on the keyboard shown. The consequence of this is that the further away from the home keys a key is (the ENTER key being the furthest away for the middle finger) the longer a movement is likely to be to operate that key from the preceding keystroke. Because the movement is longer in distance, it is also likely to take longer in time and, because it involves hopping over other keys, it is more likely to result in miskeying and error. By increasing the size of the mouldings on the keys furthest from the home keys, i.e. the ENTER key and the RESERVED keys, the target area for such long finger movements is considerably increased. This means that the finger can move faster towards the larger target area and still be likely to strike it cleanly and without fouling any of the other keys.

Each column or each row of keys preferably uses keys of a different colour, to encourage differentiation, and the CARRIAGE RETURN key is again a different colour to make clear its particular identity.

With the keyboard in its normal state, unaffected by CONTROL, CAPITAL, or NUMBER keys, the keyboard will output the correct computer code for the lower case letters of the roman alphabet and the lower case graphic signs illustrated. The keyboard will transmit the codes for other characters (CONTROL, CAPITALS, NUMBERS, CAPITAL NUMBERS, and CONTROL NUMBERS) according to which other key or keys is or are pressed simultaneously with the letter keys detailed above. The other characters to be generated are also shown on the keytops (it may also be preferable instead to show the layout of less common key characters on a separate sheet or card for the sake of clarity and simplicity).

Beneath the thumb keys, arranged beneath and according to the resting position of the thumb, as shown, are three columns of keys for the use of the thumb. To the right, and with a small tit on its surface showing the home position, is a SPACE key operated in the same way as on a traditional typewriter. Above and below this are punctuation keys which, when depressed, output the characters for a full stop and space, and a comma and space. Because in normal (non numeral) text the full stop and the comma are always followed by a space, keystrokes can be reduced and therefore keying speeded up, by combining the space character with the punctuation character.

The SPACE key (29) is two keys long so that it can readily and easily be located no matter where on the keyboard the last key had been struck before the space. The CAPITALS and CONTROL keys (32, 33) operate similarly to the way they operate on a normal typewriter or computer keyboard. That is to say they are held down momentarily before the key that it is desired they they should modify and released momentarily after the last key desired to be modified. These two keys are considerably longer (four keys long) than a normal key so that they can conveniently be depressed without awkward stretching, no matter where on the keyboard is the key which it is desired that they should modify.

A CAPITALS LOCK (34) is also provided which, when it is depressed will automatically set the keyboard in capitals mode until the LOCK key (34) or CAPITALS key (32) is depressed again. By using this key, it will therefore be possible to type in capital letters whilst still using ordinary numerals (rather than the keys allocated as "capital" numerals) without needing to keep operating the CAPITALS key. A LED indicator (35) is provided to show when the CAPITALS lock is in operation.

On each of the CONTROL, CAPITALS and SPACE keys (24), there is, as shown, a moulding (36) stretching along the keys, with the objective, again, of helping finger locaton on the right key. The profile of the moulding is different, however, from that of the character keys (23) as it is not designed to help sliding from key to key for the thumb, but is, nonetheless, designed to help an easy slide lengthways along the keys.

A repeat key (37) is also provided adjacent to the thumb keys which, if it is held down simultaneously with one of the other keys, will cause a string of characters to be output as long as the two keys are held depressed.

Arranged conveniently beneath the little finger are two columns of keys (24). In one is the NUMBERS key (38) and NUMBERS LOCK (39) and in the other is the word key and TAB key (41).

The NUMBERS key (38) operates in a similar way to the CAPITALS or CONTROL key. That is to say when the NUMBERS key is depressed simultaneously with other keys it changes the register of characters available from the letters register to the numerals register. The operative characters are listed on the other side of the key from the letters, as shown on Figure 2. Thus, when the numbers key is held depressed and the "h" key is then depressed, the code for the character "1" will be output. If the numbers key and the capitals key are both held depressed and the "h" key is depressed then the "<" sign will be produced.

For convenience the numerals are laid out on the keyboard in the same order and layout (relative to the home positions of the fingers) as the numerals on a telephone pushbutton keyboard, thus making them easier to locate and remember.

The relationship of all the other punctuation and symbols keys to the positions on the keyboard or the letters on the keys which generate them is also, as far as possible, designed to be easily memorable. A LOCK key (39), with LED indicator (42), is also provided for the numbers function so that, for instance, a series of numbers can be input without needing to hold the NUMBERS key down.

By means of the NUMBERS, CAPITALS and CONTROL keys, a total of six different characters can be output for each key on the keyboard (if CONTROL and CAPITALS can be held down simultaneously, with the addition of a CONTROL/CAPITALS key, the total number would be eight per key). Thus, excluding ancillary keys, a total of 170 different characters can be created with the keyboard as shown (28 × 6 + ENTER and SPACE). With the possibility of CONTROL and CAPITALS being depressed simultaneously, the total reaches 226.

On the keyboard are located a number of ancillary keys (40): BREAK, TAB, ESCAPE, DELETE, BACKSPACE, HOLD, which may be operated by whichever finger is convenient. They are located around the keyboard in such a way that they are less likely to be miskeyed, which, in the case of the BREAK key, could have disastrous effects. They are not affected by the control keys.

The electronics of the keyboard are standard electronics such as are commonly used in keyboards and the requirements will be apparent to those versed in the art of keyboard electronics. The character keys are electrically connected into an X—Y matrix type array. The matrix is scanned electronically which may be achieved by any of the following methods:
a) Keyboard encoder integrated circuit,
b) Standard logic integrated circuits,
c) Microprocessor.

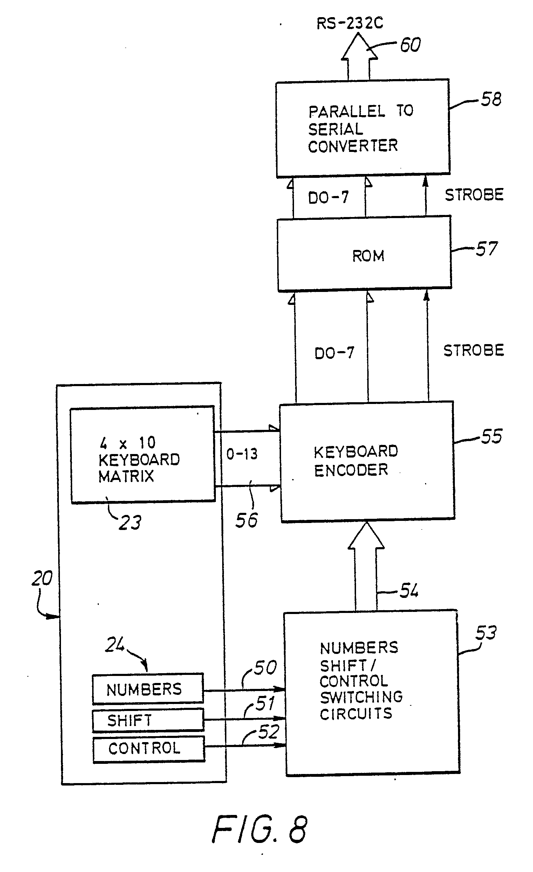

The generation of output codes is in accordance with standard technique and is shown in a block circuit diagram in Figure 8. The letter keys are scanned as a 4 × 10 matrix giving an output at 56, and a key touch is interpreted by a keyboard encoder 55. The outputs 50, 51 and 52 of the NUMBERS, SHIFT and CONTROL keys 24 alter switching circuits 53 which transmit the relevant data along lines 54 to control the output from an encoder 55. Data is then passed on to a ROM 57 where it is converted into the appropriate standard ASCII codes. A Parallel to Serial Converter 58 converts the output to standard RS-232C format which is then transmitted over a cable 60 to the host computer.

There will now be described a number of alternative arrangements and modifications which may be provided in accordance with the invention.

A number of other different switch technologies are possible and a commercial version will conveniently use some sort of printed circuit technology rather than the discrete switches described in the preferred embodiment. Alternative switch technologies would include membrane type switches, capacitive switches and other sensory devices. The wide range of available alternatives have in common that they are likely to have a short travel by comparision with traditional keyboard switches, or none at all, and are likely to need only a low operating pressure in comparison with traditional keyboard switches.

The keyboard could incorporate a switch to switch between different character sets to enable the user to have access to a wide range of characters in addition to those offered as standard, for example:
Maths symbols,
Foreign langugages,
Languages with different letters (Cyrillic, Greek, Arabic),
Editing commands for typesetting.

The switch labels for these different character sets could be changed at the same time as the character set is changed by sliding a key legend sheet in a space between the switches and any surface mouldings so that the characters of the alternative character set and not the original ones were visible.

A left-handed version of the keyboard may be a mirror image of the right-handed version. A keyboard could be conveniently built with a left-handed version and a right-handed version on either surface of the same device, so that merely by turning the keyboard over its configuration is changed from one hand to the other.

Two keyboards could be used in parallel as a two-handed device. This might offer some speed advantages over a single-handed version and should offer speed advantages over the traditional two-handed keyboard.

A keyboard could be constructed using mouldings between the keys as shown in Figure 3 to help with the delineation of the keys, with or without any mouldings actually on the keys themselves. These inter-key mouldings would help to guide the finger from one key to another and provide feedback to the finger that it was properly registered on a key. These mouldings between the keys could also be used as a finger-rest position if the keyswitch switches themselves are so touch-sensitive that the fingers could not rest on the keys themselves without triggering a character.

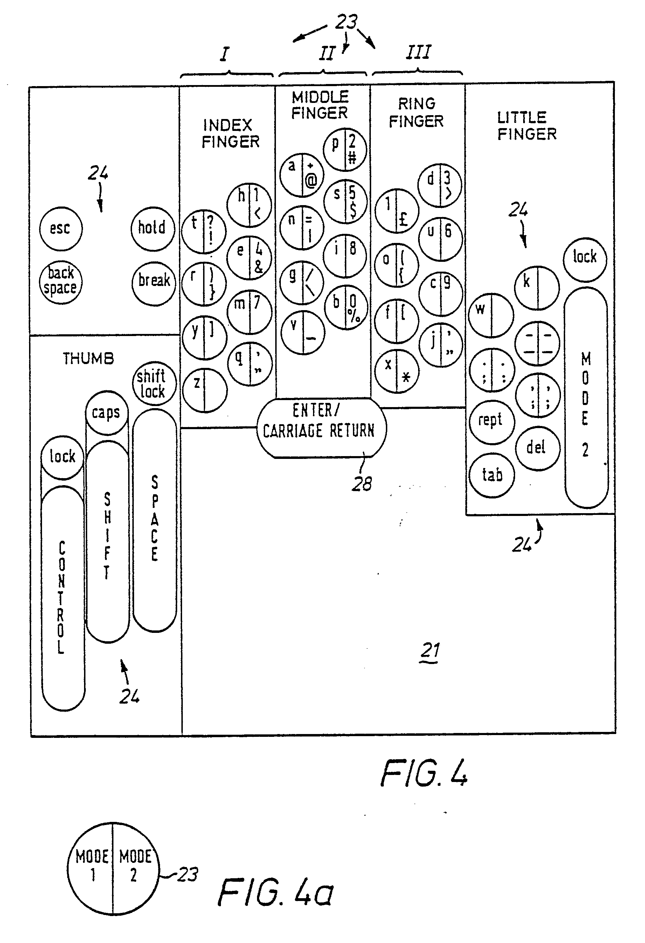

The keys could be positioned not in columns but on the diagonal as in Figures 3 and 4 which might have some advantages for making the sliding motion simpler. The number of keys allocated to each finger could be different, and the little finger could be allocated letter keys of its own. All these variations are illustrated in Figure 4.

Whilst the embodiments shown assume that the keys would all be in the same surface plane, it may be desirable for them to be in different planes, with the surfaces for use by each digit curved (probably convex) rather than flat, and with each digit in a different plane from the others. This helps to reduce the possibility of fingernails fouling on the keyboard and improve the comfort with which the keyboard can be used.

The layout of the key switches, that is to say the order in which they are arranged on the key surface, can be varied. Whilst the version on the embodiment shown is a good solution for the English language, it may be varied in other circumstances. Whilst it would probably be desirable to have an international keyboard rather than variations for each country, it is also possible that the optimal version for any particular country, or indeed for an international keyboard, will be different from that displayed.

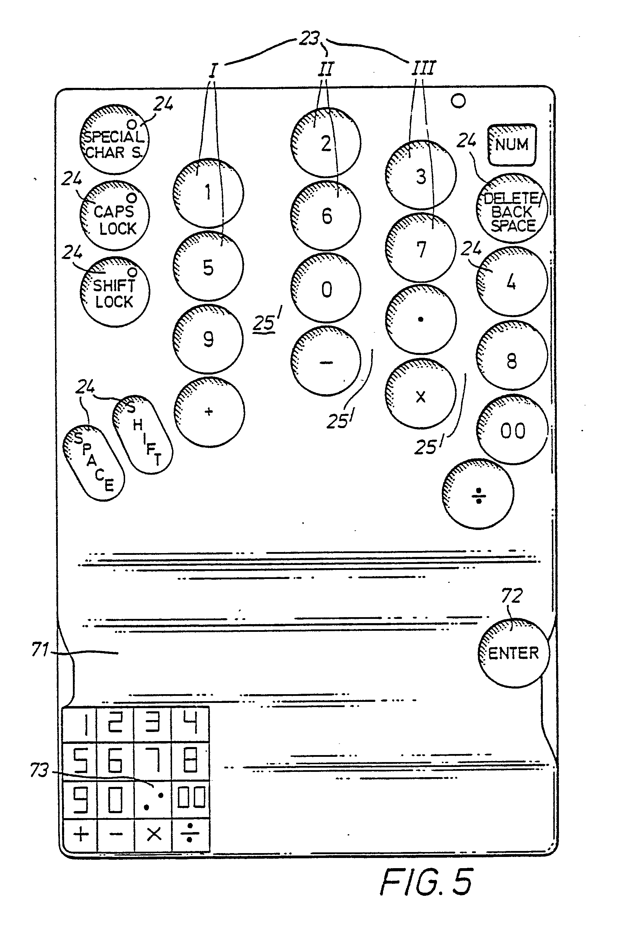

By the use of extra "NUMBER" keys (i.e. mode switching keys) it would be possible to increase the number of characters available on the keyboard. It could also be desirable to increase or reduce the number of keys accessible to the fingers, which would also have implications for the number of NUMBERS keys and/or CONTROL and SHIFT keys, depending on the number of characters which it was thought necessary to have in a particular repertoire. A version with only 16 letter keys is shown in Figure 5.

It may also be desirable to incorporate a separate HELP key as one of the ancillary keys which, when it transmits a particular code, will call up a HELP menu to guide the user of the computer device.

The size of the keyboard could be changed. If it was necessary to make it much smaller it could be reduced considerably by placing the thumb keys or some of the thumb keys under the keys for the index finger by putting the NUMBERS key and one or more of the thumb keys on the side of the device rather than on the top surface so that they are operated by a gripping motion rather than a pressing motion. The reserved keys could also be removed and the ancillary keys removed or relocated to minimise the overall size of the keyboard. The size of individual switches could also be decreased. Using these means it is possible to envisage a keyboard as small as 85 mm by 90 mm, or even smaller, although this would probably imply the loss of some ergonomic convenience.

The keyboard as a whole could be covered with an impermeable covering, if necessary, depending on the key technology, to protect the keyboard from dirt and to enable it to be washable.

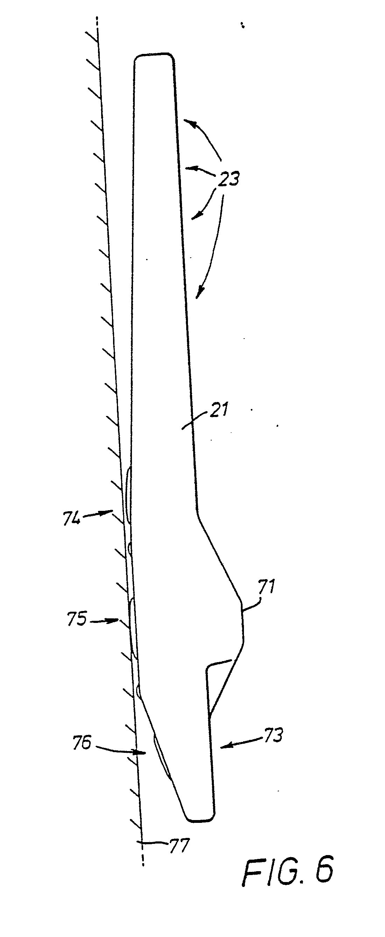

The NUMBERS and indeed CONTROL and SHIFT keys could be operated by a different means from pressing a normal key: by rocking the keyboard itself between switches located on the underside of the key (as shown in Figure 6, which is a cross-section of Figure 5), by using the heel of the hand, or even by using other parts of the body.

It would be possible to produce a keyboard to the same layout without the use of any surface mouldings, i.e. completely flat. This would be slightly cheaper to produce which could be advantageous in some circumstances, although it would be less easy to use quickly and would therefore be less suitable for other than very casual use.

Whilst in the embodiment shown the keyboard is discussed as a separate device for input to a computer or normal computer terminal, the keyboard could also be used as the keyboard for a computer which was integral to the body of the keyboard itself, of a pocket translator, pocket video book, video games, control equipment in motor or other vehicles, etc. The keyboard lends itself to building into other equipment where alphanumeric input facility is desirable.

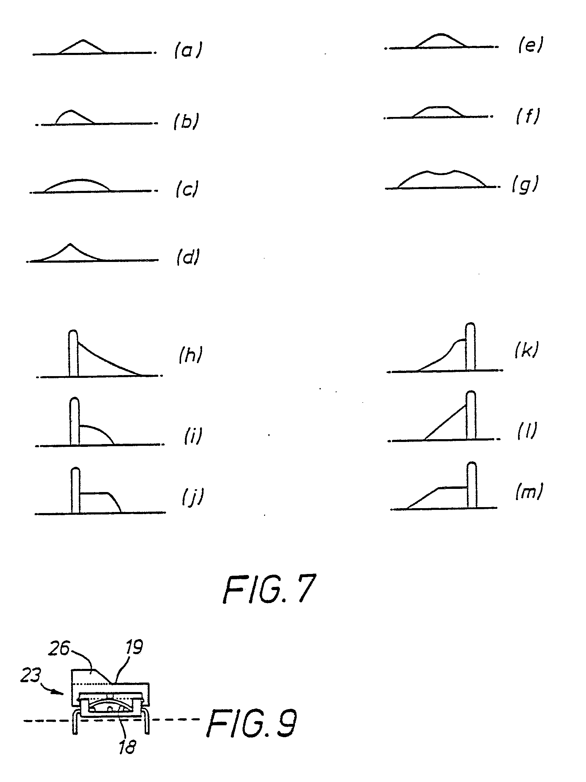

It would also be possible to use many other profiles for the mouldings on the keys, samples of which can be seen in Figure 7. Keys could be dome shaped, pyramidal with a round or flat top, multi-faceted, in fact any suitable shape with suitably sloping sides.

Depending on the context of the keyboard and the direction from which the finger is designed to impact the key, the key could also rise to an outside edge, or even form a crescent-like bank, whether convex or concave in cross-section (see Figure 7).

These different key profiles could use a multiplicity of different switch technologies including traditional moving switches, membrane switches with the moulded profile bonded to part of the striking surface, switches relying on air pressure (the moulding would take the form of an airbag which would be deformed by finger contact to activate the switch), or foam (also acting to trigger the switch when it is deformed by finger contact). Mouldings could be created by applying a flexible film to a suitably shaped keyboard either premoulded or applied to the keyboard by a technology such as vacuum shrinking.

Returning to consideration of the modification of Figure 3, the contouring may consist of moulding 61 on the base of the keyboard to denote the top of the keying area, and moulding 62 to denote the bottom of the finger area. Mouldings 25 are provided as before to separate the keys for different fingers. Mouldings in the form of small projections 63 are provided to separate each key. In another alternative, not shown, the active touch sensitive area can be recessed below the level of the base, but in preferred form the moulding is built up on the surface between the keys as shown in Figures 1 and 3. As shown in Figure 3 the mouldings can be built up higher and continuously, for example to separate keys for different fingers, and the mouldings can be lower and/or non-continuous to separate keys which are intended to be used by the same finger. When they are not typing, the fingers can rest on suitably positioned and sized mouldings serving as rest pads.

This arrangement will make mis-keying less likely than on an ordinary typewriter. The moulding will guide the fingers towards the right location or, if mis-keying, away from the right location so that it becomes obvious that an error is being made before the actual touch-sensitive surface is touched. This enables keys to be spaced closer together than is usually the case. Any slight mis-aiming of the finger will cause the finger only to touch the inactive, non-sensitive area of the keyboard, that is to say the raised moulding, rather than touching another sensitive area and so registering the wrong character.

Such an arrangement lends itself to use of the sliding movement principle set out in accordance with the present invention. If the mouldings between adjacent keys are in the shape of suitably placed small projections, the finger can slide between them from one key to another, and at the same time use the sensory feedback from the mouldings to know when the proper location is reached.

Returning now to consideration of the embodiment of Figures 5 and 6, elements which are in common between Figures 5 and 1 are indicated by like reference numerals. There are provided three main columns of four letter keys 23 in each column, the columns being indicated by I, II and III and being allocated to the first, second and third fingers respectively. The right-hand column is to be operated by the little finger and space shift lock and caps lock and special character keys are provided for the thumb bearing the same reference numerals as in Figure 1. A hand rest bar 71 is provided for the heel of the hand to rest on and an enter key 72 is provided for use by the side of the hand. A key display may be provided at 73 to indicate letters.

Referring to Figure 6, mode switches 74, 75 and 76 are provided on the underside of the base 21 for operation by rocking movement of the whole base on the surface of a table indicated diagrammatically at 77.

The principle of operation is that the letters of the alphabet are divided into two or more sets which are allocated to different modes which can be selected by the rocking movement of the base. In any particular mode a series of letters of the alphabet can be selected by operation of the letter keys 23. Rocking of the base to a different mode allows selection of different letters by operation of the same letter key. The rocking or mode position is controlled by the weight of the heel of the hand resting on the raised bar 72 on the upper surface of the keyboard. The underside mode switch surfaces conveniently have a surface of non-slip material.

Conveniently the keys are recessed beneath the general level of the upper surface of the base 21. Only the central recessed part of all switches will be touch sensitive, and the fingers will be able to rest on the ridges between the key recesses.

By way of example three modes may be provided, mode 1 being for numerals, mode 2 for the 16 most common letters, and mode 3 for the less common letters and punctuation. A fourth mode (not illustrated) may be provided for editing commands. The shift key operated by the thumb will have the same effect as a normal shift key, changing lower case to capitals and numerals or punctuation to other punctuation and signs.

Thus in principle a three mode keyboard will be able to access 96 ASCII codes ($3 \times 16 = 48$ in the lower case and 48 in the upper case).

Referring now again in more detail to Figure 7, there are shown in diagrammatic form cross-sections through 13 keys referred to by the letters (a) to (m). The shapes shown in Figures 7(a) to (g) illustrate keys suitable for keying from both directions. The cross-sections shown in Figures 7(h) to (m) illustrate keys suitable for keying from one direction only.

With regard to the second aspect of the invention concerned with contouring, it will be appreciated that different contouring for different keys can be achieved by shaping the keys differently from each other, or by having some keys of the same shape but orientated differently relative to the user of the keyboard.

Although it will be appreciated that many variations of keyboard may be provided in accordance with the present invention, it is possible in preferred embodiments to provide at least to a degree the following advantages. A keyboard may be provided for which no training is required to use it usefully, that is to say that even an unskilled person coming straight to the keyboard can obtain some useful output. A keyboard can be arranged to be easy to learn at all levels of skill and speed, compared with other keyboards, and can be made fast and accurate to use after any given length of training comparable with training for other available keyboards. The keyboard can be made flexible i.e. able to output at least as wide a range of characters as are normally required in information processing, including foreign language and multi-language applications.

In preferred arrangements the keyboard will be usable by one hand, freeing the other hand for other purposes such as telephone use, but without causing more fatigue than traditional keyboards. However in some arrangements two keyboards embodying the invention may be provided for extra speed in some typing situations.

Embodiments may be produced of small size, suitable for pocket and portable equipment and less obtrusive on the desk, and may be produced on sound ergonomic principles to discourage error and reduce fatigue.

## Claims

1. A keyboard for operation by human hand digits to signify letters of an alphabet by generating signals indicative of the letters, comprising
    a base (21),
    a plurality of keys (22) including a plurality of letter keys (23) each operable by a human digit to signify a letter, in which operation of no more than one at a time of the letter keys is required when signifying any letter of the alphabet, wherein at least some of the keys (23) are contoured so as to provide a surface inclined to the horizontal for contact by a human digit such that the said keys may be operated by movement of a digit in a substantially planar movement parallel to the keyboard, characterised in that the keys are so arranged on the keyboard as to permit the sliding of a digit from one key to another in a substantially planar movement to cause a force to be derived from the planar movement of the digit, and translated by the inclined surface of the key (23) into a force generally at right angles to the plane of the keyboard to operate the key, wherein the plurality of letter keys include a plurality of letter keys arranged in a matrix of three columns (I, II, III) generally longitudinally of the three strongest fingers of a human hand in the intended operating position and wherein the keyboard includes raised portions (25, 26) between or on the keys of each of the said three columns the shaped portions defining channels to guide the fingers of the hand of the operator along the keys (23) of the respective column.

2. A keyboard as claimed in Claim 1 wherein the keys (23) in each of the said columns of keys are arranged in rows generally transverse of the columns, the parts (26) of the keys (23) which are outermost of their respective column being raised to form the said channel.

3. A keyboard according to Claim 1 or Claim 2 in which the keys (23) in the matrix of columns are arranged in rows of keys generally transverse of the fingers, the pitch between transverse rows of keys being substantially equal to the difference in length between the longest finger and the other two strongest fingers of the human hand.

4. A keyboard according to any one of Claims 1 to 3 in which the configuration in which the letters are allocated is arranged so that the most commonly used letters can be signified by the operation of letter keys (23) disposed generally in the central region of the said columns.

5. A keyboard according to any one of Claims 1 to 4 in which the said three columns (I, II, III) include keys (23) for signifying all the letters of the alphabet and in which any letter of the alphabet can be signified by an action consisting only of operation of one, appropriately selected, letter key.

6. A keyboard according to any one of the preceding claims in which all the letter keys (23) are positioned for operation, in normal use, by the fingers of the human hand.

7. A keyboard according to any one of the preceding claims in which the keyboard includes mode selector means (74, 75, 76) operable by movement of the said single human hand without substantial movement of the whole hand across the keyboard, said mode selector means being operable to select different modes for the letter keys such that operation of a letter key in different modes causes the generation of signals indicative of different character information.

8. A keyboard according to Claim 7 in which the characters which may be signified by the keys (23), including the said letters of the alphabet concerned are divided into at least two classes, selectable in respective modes by the mode selector means, in which the keys are operable to signify different characters from different classes depending on which class has been selected by the mode selector means, and in which any letter of the alphabet concerned can be signified by operation of only a single letter key at a time, provided that an appropriate mode selection is made by operation of the mode selector means (74, 75, 76).

9. A keyboard according to Claim 8 in which the said mode selector means (74, 75, 76) comprises a switching device associated with the said base of the keyboard and operable by a rocking motion of the said base and arranged to be operated in normal use by a rocking motion of the whole said single human hand.

## Patentansprüche

1. Tastatur zur Betätigung oder Bedienung mit den Fingern einer menschlichen Hand zum Erkennen von Buchstaben eines Alphabets durch Erzeugen von Signalen, die auf die Buchstaben hinweisen, mit einem Sockel (21) und einer Vielzahl von Tasten (22), die eine Vielzahl von Buchstabentasten (23) aufweisen, von denen jede mittels eines menschlichen Fingers zur Erkennung eines Buchstabens betätigbar ist, wobei die Betätigung von nicht mehr als einem der Hauptbuchstaben gleichzeitig erforderlich ist, wenn irgendein Buchstabe des Alphabets erkannt, wird, wobei wenigstens einige der Tasten (23) mit einer Kontur versehen sind, so daß eine zur Horizontalen geneigte Oberfläche für die Berührung durch einen menschlichen Finger gebildet wird, derart, daß die Tasten durch Bewegung eines Fingers in einer im wesentlichen ebenen Bewegung parallel zu der Tastatur betätigt werden können, dadurch gekennzeichnet, daß die Tasten so an der Tastatur angeordnet sind, daß das Gleiten eines Fingers von einer Taste zu einer anderen in einer im wesentlichen ebenen Bewegung möglich ist, um eine aus der ebenen Bewegung des Fingers herrührende Kraft hervorzurufen, die durch die geneigte Oberfläche der Taste (23) in eine Kraft im allgemeinen rechtwinkelig zur Ebene der Tastatur umgewandelt wird, um die Taste zu betätigen, wobei die Vielzahl von Buchstabentasten eine Vielzahl von Buchstabentasten aufweist, die in einer Matrix mit drei Spalten (I, II, III) im wesentlichen längs zu den drei stärksten Fingern einer menschlichen Hand in der beabsichtigten Betätigungsstellung angeordnet sind, und wobei die Tastatur erhöhte Abschnitte (25, 26) zwischen oder auf den Tasten jeder der drei Spalten aufweist, wobei die geformten Abschnitte Kanäle bestimmen zur Führung der Finger der Hand der Bedienungsperson längs der Tasten (23) der jeweiligen Spalte.

2. Tastatur nach Anspruch 1, dadurch gekennzeichnet, daß die Tasten (23) in jeder der Tastenspalten in Reihen im allgemeinen quer zu den Spalten angeordnet sind, und daß die Teile (26) der Tasten (23), welche an den Außenseiten der jeweiligen Spalte angeordnet sind, erhöht sind, um den Kanal zu bilden.

3. Tastatur nach Anspruch 1 oder 2, dadurch gekennzeichnet, daß die Tasten (23) in der Matrix aus den Spalten in Tastenreihen im allgemeinen quer zu den Fingern angeordnet sind, und daß der Abstand zwischen Querreihen der Tasten im wesentlichen gleich ist der Längendifferenz zwischen dem längsten Finger und den beiden anderen stärksten Finger der menschlichen Hand.

4. Tastatur nach einem der Ansprüche 1 bis 3, dadurch gekennzeichnet, daß die Anordnung, in welcher die Buchstaben verteilt sind, derart vorgesehen ist, daß die gewöhnlich am meisten verwendeten Buchstaben durch die Betätigung von Buchstabentasten (23) erkannt werden können, die im allgemeinen im mittleren Bereich der Spalten angeordnet sind.

5. Tastatur nach einem der Ansprüche 1 bis 4, dadurch gekennzeichnet, daß die drei Spalten (I, II, III) Tasten (23) zur Erkennung aller Buchstaben des Alphabets aufweisen, und daß irgendein Buchstabe des Alphabets durch eine Betätigung erkannt werden kann, die nur aus der Betätigung einer geeignet ausgewählten Buchstabentaste besteht.

6. Tastatur nach einem der vorhergehenden Ansprüche, dadurch gekennzeichnet, daß alle Buchstabentasten (23) zur Betätigung im normalen Gebrauch durch die Finger der menschlichen Hand angeordnet sind.

7. Tastatur nach einem der vorhergehenden Ansprüche, dadurch gekennzeichnet, daß die Tastatur eine Betriebsartauswahl-Einrichtung (74, 75, 76) aufweist, die durch die Bewegung einer einzigen menschlichen Hand ohne wesentliche Bewegung der ganzen Hand über die Tastatur betätigt wird, und daß die Betriebsartauswahl-Einrichtung betätigbar ist, um verschiedene Betriebsarten für die Buchstabentasten auszuwählen derart, daß die Betätigung der Buchstabentaste bei verschiedenen Betriebsarten die Erzeugung von Signalen bewirkt, die auf verschiedene Merkmalsinformationen hinweisen.

8. Tastatur nach Anspruch 7, dadurch gekennzeichnet, daß die Merkmale, welche durch die Tasten (23) angedeutet werden können und die die Buchstaben des betreffenden Alphabets enthalten, in wenigstens zwei Klassen aufgeteilt sind, die in der jeweiligen Betriebsart von der Betriebsartauswahl-Einrichtung auswählbar sind, daß die Tasten betätigbar sind, um verschiedene Merkmale aus verschiedenen Klassen abhängig davon, welche Klasse von der Betriebsartauswahl-Einrichtung ausgewählt worden ist, anzudeuten, und daß irgendein Buchstabe des betreffenden Alphabets durch die Betätigung von nur einer einzigen Buchstabentaste zur selben Zeit angedeutet werden kann, vorausgesetzt, daß eine geeignete Betriebsartauswahl vorgenommen worden ist durch Betätigung der Betriebsartauswahl-Einrichtung (74, 75, 76).

9. Tastatur nach Anspruch 8, dadurch gekennzeichnet, daß die Betriebsartauswahl-Einrichtung (74, 75, 76) eine Schalteinrichtung aufweist, die mit dem Sockel der Tastatur verbunden ist, die über eine Kippbewegung des Sockels betätigbar ist und die angeordnet ist, um bei normaler Benutzung durch eine Kippbewegung nur der einen menschlichen Hand insgesamt betätigt zu werden.

## Revendications

1. Clavier destiné à être manoeuvré par les doigts d'une main humaine afin qu'il désigne des lettres d'un alphabet par création de signaux représentatifs des lettres, comprenant:

une base (21),

plusieurs touches (22) ayant plusieurs touches littérales (23) destinées à être manoeuvrée chacune par un doigt humain afin qu'elle désigne une lettre, la signification d'une lettre quelconque de l'alphabet ne nécessitant pas la manoeuvre de plus de l'une des touches littérales principales à la fois,

certaines au moins des touches (23) étant profilées afin qu'elles délimitent une surface inclinée par rapport à l'horizontal, cette surface étant destinée à être au contact d'un doigt humain afin que les touches puissent être manoeuvrées par un déplacement d'un doigt suivant un mouvement sensiblement plan parallèle au clavier, caractérisé en ce que les touches sont disposées sur le clavier afin qu'elles permettent le glissement d'un doigt d'une touche à une autre suivant un mouvement sensiblement plan et provoquent l'application d'une force tirée du mouvement plan du doigt, cette force étant transformée par la surface inclinée de la touche (23) en une force sensiblement perpendiculaire au plan du clavier afin que la touche soit manoeuvrée, les touches littérales comprenant plusieurs touches littérales placées dans une matrice de trois colonnes (I, II, III) orientées de façon générale suivant la longueur des trois doigts les plus robustes d'une main humaine, dans la position prévue de fonctionnement, et le clavier comporte des parties en saillie (25, 26) placées entre les touches ou sur les touches de chacune des trois colonnes, les parties conformées délimitant des canaux de guidage des doigts de la main d'un opérateur le long des touches (23) de la colonne respective.

2. Clavier selon la revendication 1, dans lequel les touches (23) de chacune des colonnes de touches sont disposées par rangées sensiblement transversales aux colonnes, les parties (26) des touches (23) qui sont les plus à l'extérieur de leur colonne respective étant en saillie afin qu'elles forment ledit canal.

3. Clavier selon l'une des revendications 1 et 2, dans lequel les touches (23) de la matrice de colonnes sont disposées par rangées de touches sensiblement transversales aux doigts, le pas des rangées transversales de touches étant sensiblement égal à la différence de longueur entre le doigt le plus long et les deux autres doigts les plus robustes de la main humaine.

4. Clavier selon l'une quelconque des revendications 1 à 3, dans lequel la configuration d'attribution des lettres est disposée de manière que les lettres les plus courramment utilisées peuvent être désignées par manoeuvre des touches littérales (23) disposées de façon générale dans la région centrale desdites colonnes.

5. Clavier selon l'une quelconque des revendications 1 à 4, dans lequel lesdites trois colonnes (I, II, III) ont des touches (23) destinées à désigner toutes les lettres de l'alphabet, et dans lequel une lettre quelconque de l'alphabet peut être désignée par une action consistant uniquement en la manoeuvre d'une touche littérale convenablement choisie.

6. Clavier selon l'une quelconque des revendications précédentes, dans lequel toutes les touches littérales (23) sont disposées afin que, lors d'une utilisation normale, elles soient manoeuvrées par les doigts de la main humaine.

7. Clavier selon l'une quelconque des revendications précédentes dans lequel le clavier comporte un dispositif sélecteur de modes (74, 75, 76) destiné à être manoeuvré par le déplacement de la main humaine unique sans déplacement notable de l'ensemble de la main au-dessus du clavier, le dispositif sélecteur de modes étant destiné à sélectionner des modes différents pour les touches de lettres si bien que la manoeuvre d'une touche littérale dans différents modes provoque la création de signaux représentatifs de différentes informations sur des caractères.

8. Clavier selon la revendication 7, dans lequel les caractères qui peuvent être désignés par les touches (23), comprenant lesdites lettres de l'alphabet concerné sont répartis en au moins deux classes qui peuvent être choisies dans les modes respectifs par le dispositif sélecteur de modes, dans lequel les touches peuvent être manoeuvrées afin qu'elles désignent des caractères différents de différentes classes suivant la classe choisie par le dispositif sélecteur de modes, et dans lequel une lettre quelconque de l'alphabet concerné peut être désignée par manoeuvre d'une seule touche littérale à la fois, pourvu qu'une sélection convenable de mode soit effectuée par manoeuvre du dispositif sélecteur de modes (74, 75, 76).

9. Clavier selon la revendication 8, dans lequel le dispositif sélecteur de modes (74, 75, 76) est un dispositif de commutation associé à ladite base du clavier et manoeuvrable par basculement de la base, ce dispositif étant destiné à être manoeuvré, lors d'une utilisation normale, par un mouvement de basculement de l'ensemble de ladite main humaine unique.

FIG.1

FIG.1b

FIG.1c

*FIG.1a*

*FIG.2*

*FIG.2a*

*FIG.2c*

*FIG.3*

*FIG.2b*

FIG. 4

FIG. 4a

FIG. 5

FIG. 6

FIG. 7

FIG.9

FIG. 8